# FASCICULE DE BREVET EUROPEEN

(11) **EP 0 512 486 B1**
(45) Date de publication et mention de la délivrance du brevet: **05.07.1995**
(21) Numéro de dépôt: 92107597.4
(22) Date de dépôt: 06.05.1992
(51) Int. Cl.: H02G 15/14, G02B 6/44

(54) **Câble d'accès de répéteur sous-marin**
Zugangskabel für einen Unterwasserverstärker
Access cable for an underwater repeater

(30) Priorité: 07.05.1991 FR 9105577
(43) Date de publication de la demande: 11.11.1992
(73) Titulaire: ALCATEL CABLE, 92111 Clichy Cédex (FR)
(72) Inventeur: Blondin, Jean-François, F-62100 Coulogne (FR)
(74) Mandataire: Weinmiller, Jürgen

(56) Documents cités:
- GB-A- 2 027 932
- GB-A- 2 197 287

## Description

La présente invention est relative aux liaisons sous-marines de transmission de grande distance, par câble à fibres optiques équipé de répéteurs immergés, et concerne plus particulièrement le raccordement de ces répéteurs au câble de ligne, réalisé par leurs câbles d'accès.

De manière connue, les équipements de répéteur immergé sont montés dans un caisson métallique étanche de protection contenu ou constituant un boîtier ou fût cylindrique très résistant mécaniquement, notamment aux efforts de traction. Ce boîtier est fixé à chacune de ses extrémités, par un système articulé, au boîtier de résistance analogue contenant une boîte de jonction au câble de ligne. Le caisson métallique du répéteur est équipé, également à chacune de ses extrémités, d'une amorce de câble reliée aux équipements internes du répéteur à travers la paroi du caisson par une traversée étanche. Cette amorce de câble est dite câble d'accès de répéteur. L'extrémité libre de ce câble d'accès est raccordée au câble de ligne dans la boîte de jonction et fixée par un raccord sur la paroi de la boîte de jonction, à son entrée dans cette boîte de jonction, lors de la pose de l'installation.

Ce câble d'accès de répéteur est formé d'un tube conducteur, acheminant le courant de téléalimentation du répéteur depuis la boîte de jonction, qui est recouvert d'une gaine de polyéthylène assurant sa protection électrique, et qui renferme des fibres optiques, ainsi protégées, reposant sans contrainte dans le tube et assurant la transmission entre la boîte de jonction et le répéteur. Il est replié en tire-bouchon, au moins au sortir du répéteur, pour présenter une certaine souplesse au niveau du système articulé de liaison des boîtiers extérieurs du répéteur et de la boîte de jonction.

A l'extrémité libre du câble d'accès, ses fibres sont en surlongueur par rapport au tube et sont raccordées aux fibres du câble dans la boîte de jonction et le raccord monté sur le tube débarrassé de sa gaine est fixé dans l'entrée de la boîte de jonction. Ce raccord reçoit en outre le courant de télé-alimentation transmis par le tube au répéteur. Après le raccordement du câble d'accès à la boîte de jonction, cette dernière et le raccord sont enrobés dans une gaine de polyéthylène injecté sous pression, débordant sur la gaine de câble d'accès, et assurant l'étanchéité d'ensemble au niveau de la boîte de jonction.

Ce mode de raccordement d'un répéteur au câble de ligne est notamment décrit dans la demande de brevet FR-A-2 606 943. En outre, selon ce document, le raccord équipant l'extrémité du câble d'accès est prévu pour constituer un fusible mécanique, de manière à céder lors d'efforts anormalement élevés exercés sur le câble d'accès. Ces efforts ont lieu essentiellement lors des manipulations du câble d'accès pendant le raccordement du répéteur au câble de ligne et l'injection de la gaine d'enrobage de la boîte de jonction et du raccord avec la partie attenante gainée du câble d'accès. Ils conduisent, le cas échéant, à ce que la fixation du raccord dans l'entrée de la boîte cède pour éviter un endommagement du côté du répéteur qui pourrait créer une voie d'eau dans son caisson.

Ce point de fragilité, au niveau de la fixation du raccord dans l'entrée de la boîte de jonction, conduit à prévoir des dispositions relativement complexes sur l'entrée de la boîte de jonction auxquelles correspondent des temps de pose de la liaison relativement longs. En outre, il s'avère que, lorsque la fixation du raccord dans l'entrée de la boîte de jonction cède, souvent la fixation, réalisée jusqu'à présent en général par brasure, du raccord sur l'extrémité du tube du câble d'accès cède également, au moins partiellement, et nécessite une reprise.

La présente invention a pour but d'équiper l'extrémité libre d'un câble d'accès de répéteur d'un raccord de fixation à la boîte jonction présentant une résistance mécanique comparable à celle du câble d'accès lui-même et permettant de simplifier le mode de fixation à la boîte de jonction et de réduire le temps de fixation et le temps d'ensemble de reprise éventuelle.

La présente invention a donc pour objet un câble d'accès de répéteur sous-marin, provenant d'un répéteur et assurant son raccordement dans une boîte de jonction à un câble sous-marin de ligne, comportant des éléments de transmission renfermés dans un tube de protection lui-même recouvert d'une gaine et présentant à l'opposé du répéteur une extrémité libre équipée d'un raccord terminal emmanché et fixé sur ledit tube de protection débarassé de ladite gaine à cette extrémité, ledit raccord ayant une partie centrale de fixation dans une entrée de la boîte de jonction et, de part et d'autre, une première partie terminale reçue dans ladite boîte de jonction et la deuxième partie terminale opposée restant extérieure à ladite boîte de jonction, caractérisé en ce que ladite partie centrale du raccord est à moyens d'ancrage direct dans l'entrée de la boîte de jonction et que ladite deuxième partie terminale du raccord est sertie et présente un joint intérieur de colle à haute tenue mécanique entre elle et le tube de protection , pour conférer aux fixations du raccord sur ledit tube de protection et dans l'entrée de la boîte de jonction des caractéristiques mécaniques comparables à celles dudit tube de protection gainé.

Le câble d'accès de répéteur présente en outre au moins l'une des particularités suivantes :
- ladite deuxième partie du raccord présente au moins trois zones serties sur le tube de protection le long de ladite deuxième partie terminale, chacune décalée angulairement par rapport à la zone qui lui est adjacente, de préférence sensiblement de 90°,
- ledit joint intérieur de colle est constitué par une colle chargée de poudre de carborundum,
- le tube de protection et ledit raccord étant métalliques, ce raccord comporte en outre un film de vernis conducteur entre lui et le tube de protection, dans leurs parties sans colle entre elles,
- les éléments de transmission étant des fibres optiques, ladite extrémité libre comporte en outre un tube capillaire rigide entourant lesdites fibres et intérieur audit tube de protection s'étendant dans ledit tube de protection au delà de la deuxième partie terminale dudit raccord fixé sur ledit tube de protection.

Les caractéristiques et avantages de la présente invention ressortiront de la description faite ci-après d'un exemple de réalisation illustré selon les dessins ci-annexés. Dans ces dessins :
- La figure 1 est une vue schématique partielle d'un câble d'accès de répéteur, montrant l'extrémité libre de ce câble d'accès équipée selon l'invention et monté sur une entrée d'une boîte de jonction,
- la figure 2 est une vue en coupe, à échelle agrandie par rapport à la figure 1, de l'extrémité libre de ce câble d'accès.

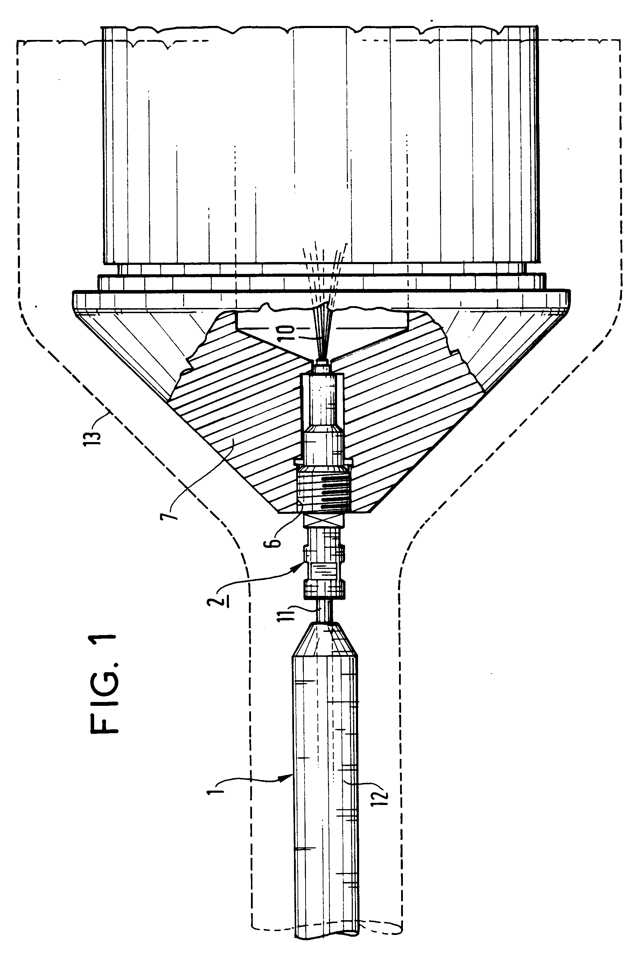

Dans la figure 1, on n'a représenté que l'extrémité libre d'un cable d'accès de répéteur 1. Ce câble d'accès provient d'un répéteur non représenté à raccorder à un câble de ligne d'une liaison de transmission sous-marine, dans une boîte de jonction. Son extrémité libre est équipée d'un raccord 2.

Ce raccord présente une partie sensiblement centrale 3, épaulée sur les deux parties terminales 4 et 5 de part et d'autre d'elle. Cette partie centrale 3 a un filetage 3A et est directement vissée dans une entrée correspondante 6 prévue à son effet dans une boîte de jonction 7 au câble de ligne, ou plus précisément dans le couvercle de cette boîte de jonction. La partie terminale 4 du raccord vient à l'intérieur de la boîte jonction et l'autre 5 reste extérieure à la boîte de jonction.

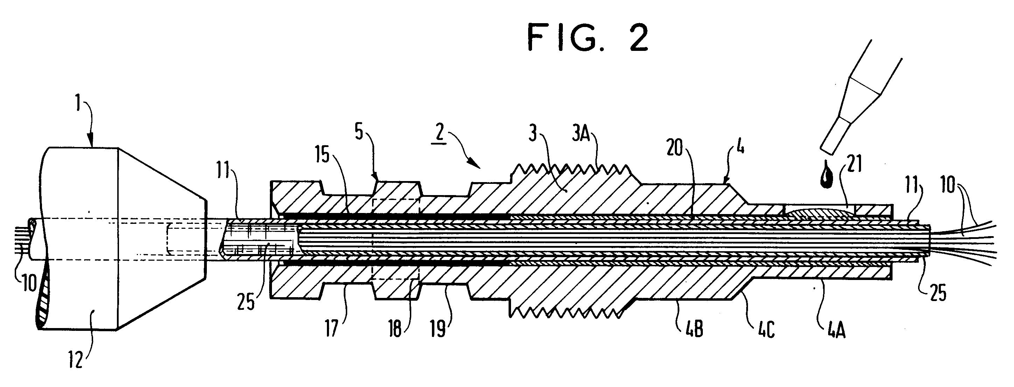

Dans une liaison de transmission par câble sous-marin à fibres optiques, le câble d'accès 1 est à fibres optiques 10. Ainsi que visible dans la figure 1 et plus particulièrement dans la figure 2, les fibres optiques 10 sont renfermées dans un tube métallique de protection 11, lui-même recouvert d'une gaine de polyéthylène 12. Les fibres optiques 10 acheminent la transmission de la boîte de jonction, dans laquelle elles sont raccordées de manière connue et non représentée aux fibres du câble de ligne, au répéteur équipé à chacune de ses extrémités d'un tel câble d'accès. Le tube métallique 11 assure la transmission de la téléalimentation du répéteur depuis la boîte de jonction. La gaine 12 assure la protection électrique du tube 11.

Les fibres optiques 10 sont en surlongueur sur le tube 11 à cette extrémité libre du câble d'accès. Le raccord 2 est fixé sur le tube débarassé de sa gaine à cette extrémité. En plus de la fixation du câble d'accès sur la boîte de jonction, il assure la liaison électrique de la boîte de jonction, au tube 11 pour la transmission de la téléalimentation. Ce raccord et l'extrémité de la gaine 12 sont enrobés avec la boîte de jonction, après le raccordement du câble d'accès, dans une couche de polyéthylène 13 assurant l'étanchéité d'ensemble, du côté de cette boîte de jonction.

La fixation sur le tube 11 du raccord 2 à visser dans l'entrée de la boîte de jonction est précisée en se référant à la figure 1 ou 2.

Ce raccord 2 emmanché sur le bout du tube 11 est fixé à l'aide d'un joint de colle de haute résistance mécanique 15 entre sa partie terminale 5 et le tube et par sertissage de cette même partie terminale 5 sur le tube.

Ce joint 15 est réalisé à l'aide de colle chargée de poudre de carborundum, qui contient environ 10 % de cette poudre.

Le sertissage est réalisé sur la longueur de cette partie terminale 5 en au moins trois zones successives 17, 18 et 19, qui sont décalées de 90° d'une zone à la suivante. Un ébavurage laisse cette partie terminale 5 exempte de toute trace extérieure de colle, qui pourrait nuire à l'opération finale de moulage de la couche d'étanchéité 13.

Cette fixation du raccord sur le tube et son vissage dans l'entrée de la boîte de jonction lui confèrent une tenue sur le tube et sur la boîte de jonction ayant des caractéristiques mécaniques analogues à celles du tube 11 recouvert de sa gaine 12.

Ce même raccord 2 présente en outre un film de vernis conducteur 20, entre son autre partie terminale 4 ainsi que de préférence sa partie centrale 3 et le tube 11. Ce film conducteur 20 assure une bonne liaison électrique du raccord et du tube, qui ont par ailleurs le joint de colle entre eux. Un trou 21 débouchant dans l'alésage intérieur du raccord est prévu sur cette partie terminale 4 pour recevoir la ou les quelques gouttes de vernis nécessaires pour constituer ce film conducteur, ainsi que schématisé dans la figure 2.

En outre, selon l'invention, avantageusement un tube capillaire 25 intérieur au tube 11 équipe l'extrémité libre du câble d'accès. Ce tube capillaire 25 est choisi de diamètre extérieur très peu inférieur au diamètre intérieur du tube 11. Il est enfilé sur les portions terminales des fibres et glissé dans le tube de protection 11. Il est choisi de longueur supérieure à celle du raccord, pour venir dans le tube 11 au delà de la partie terminale 5 du raccord fixé sur lui. Avantageusement, il s'étend jusque la partie gainée du tube 11. Il est directement maintenu en place dans le tube de protection 11, par la très légère déformation de celui-ci pendant l'opération de sertissage du raccord sur lui.

Ce tube capillaire 25 rigidifie l'extrémité libre du câble d'accès. Il évite le flambage du tube de protection 11 contenant les fibres, qui est dégainé sur cette extrémité libre et équipé du raccord terminal 2. Il évite aussi tout risque de coincement des fibres dans le tube de protection, au cours du sertissage du raccord. En outre, il protège les fibres pour d'éventuelles opérations de reprise, nécessitant de sectionner le tube de protection pour la suppression de la portion endommagée et le montage comme précédemment d'un nouveau raccord sur la nouvelle extrémité dégainée.

En regard de la fixation de ce raccord sur la boîte de jonction, on note que la partie terminale 4 du raccord assure le guidage dans l'entrée 6 de la boîte de jonction pour le vissage du raccord. Elle a sa surface extérieure étagée en deux parties 4A et 4B séparées par un flanc incliné 4C d'épaulement et vient en butée au fond de l'alésage définissant l'entrée 6. Aprés la fixation sur la boîte de jonction et l'enrobage d'ensemble dans la couche 13, le film de vernis conducteur, de liaison électrique du raccord au tube, se trouve à l'intérieur de la boîte de jonction et est ainsi toujours protégé.

## Revendications

1. Câble d'accès de répéteur sous-marin (1), provenant d'un répéteur et assurant son raccordement dans une boîte de jonction (7) à un câble sous-marin de ligne, comportant des éléments de transmission renfermés dans un tube de protection (11) lui-même recouvert d'une gaine et présentant à l'opposé du répéteur une extrémité libre équipée d'un raccord terminal (2) emmanché et fixé sur ledit tube de protection (11) débarassé de ladite gaine à cette extrémité, ledit raccord (2) ayant une partie centrale (3) de fixation dans une entrée (6) de la boîte de jonction (7) et, de part et d'autre, une première partie terminale (4) reçue dans ladite boîte de jonction et la deuxième partie terminale (5) opposée restant extérieure à ladite boîte de jonction (7), caractérisé en ce que ladite partie centrale (3) du raccord (2) est à moyens (3A) d'ancrage direct dans l'entrée (6) de la boîte de jonction (7) et que ladite deuxième partie terminale (5) du raccord est sertie (17-19) et présente un joint intérieur de colle à haute tenue mécanique (15) entre elle et le tube de protection (11), pour conférer aux fixations du raccord (2) sur ledit tube de protection et dans l'entrée de la boîte de jonction des caractéristiques mécaniques comparables à celles dudit tube de protection gainé.

2. Câble d'accès de répéteur selon la revendication 1, caractérisé en ce que ladite deuxième partie terminale (5) du raccord (2) présente au moins trois zones serties (17-19) sur le tube de protection (11) le long de ladite deuxième partie terminale, chacune décalée angulairement par rapport à la zone qui lui est adjacente, de préférence sensiblement de 90°.

3. Câble d'accès de répéteur selon l'une des revendications 1 et 2, caractérisé en ce que le joint intérieur de colle (15) est constitué par une colle chargée de poudre de carborundum.

4. Câble d'accès de répéteur selon l'une des revendications 1 à 3 et à tube de protection et raccord terminal métalliques, caractérisé en ce qu'il comporte en outre un film intercalaire de vernis conducteur (20), entre ledit raccord (2) et ledit tube de protection, dans leurs parties exemptes de colle entre elles.

5. Câble d'accès de répéteur selon la revendication 4, caractérisé en ce que ladite première partie terminale (4) dudit raccord (2) présente un trou (21) débouchant intérieurement et recevant ledit vernis conducteur pour la formation dudit film intercalaire conducteur (20).

6. Câble d'accès de répéteur selon l'une des revendications 1 à 5, à tube de protection métallique dans lequel les éléments de transmission intérieurs sont constitués par des fibres optiques, caractérisé en ce que ladite extrémité libre comporte en outre un tube capillaire rigide (25) entourant lesdites fibres (10) et intérieur audit tube de protection (11), s'étendant dans ledit tube de protection (11) au-delà de la deuxième partie terminale (5) dudit raccord (2) fixé sur ledit tube de protection.

7. Câble d'accès de répéteur selon la revendication 6, caractérisé en ce que ledit tube capillaire (25) est maintenu en place dans ledit tube de protection, sur ladite extrémité libre, par le tube de protection lui-même et la deuxième partie terminale (5) sertie dudit raccord (2).

## Patentansprüche

1. Zugangskabel zu einem Seekabelregenerator (1), das von einem Regenerator kommt und dessen Anschluß an ein Seekabel in einem Anschlußkasten (7) bewirkt, wobei das Zugangskabel Übertragungselemente aufweist, die in einem Schutzrohr (11) eingeschlossen sind, das selbst von einer Hülle umgeben ist und dem Regenerator entgegengesetzt ein freies Ende aufweist, das mit einer Endverankerung (2) versehen ist, die auf das Schutzrohr (11), das an diesem Ende keine Hülle aufweist, aufgeschoben und auf ihm befestigt ist, wobei die Verankerung (2) einen zentralen Bereich (3) zur Befestigung in einem Eingang (6) des Anschlußkastens (7) und an einer Seite einen ersten Endbereich (4), der in den Anschlußkasten eindringt, und an der anderen Seite einen zweiten entgegengesetzten Endbereich (5) aufweist, der außerhalb des Anschlußkastens (7) bleibt, dadurch gekennzeichnet, daß der zentrale Bereich (3) der Verankerung (2) Mittel (3A) zum direkten Verankern im Eingang (6) des Anschlußkastens (7) aufweist und daß der zweite Endbereich (5) der Verankerung aufgepreßt ist (17-19) und eine innere Klebdichtung mit hohem mechanischem Halt (15) zwischen diesem Endbereich und dem Schutzrohr (11) besitzt, um den Befestigungen der Verankerung (2) auf dem Schutzrohr und im Eingang des Anschlußkastens mechanische Eigenschaften vergleichbar denen des umhüllten Schutzrohrs zu verleihen.

2. Regenerator-Zugangskabel nach Anspruch 1, dadurch gekennzeichnet, daß der zweite Endbereich (5) der Verankerung (2) mindestens drei Preßzonen (17-19) auf dem Schutzrohr (11) entlang des zweiten Endbereichs aufweist, die je winkelmäßig in Bezug auf die benachbarte Zone vorzugsweise um im wesentlichen 90° winkelversetzt sind.

3. Regenerator-Zugangskabel nach einem der Ansprüche 1 und 2, dadurch gekennzeichnet, daß die innere Klebdichtung (15) aus einem mit Karborundpulver vermischten Kleber besteht.

4. Regenerator-Zugangskabel nach einem der Ansprüche 1 bis 3, mit einem metallischen Schutzrohr und metallischen Endanschluß, dadurch gekennzeichnet, daß es außerdem eine Zwischenschicht aus leitendem Lack (20) zwischen der Verankerung (2) und dem Schutzrohr in den Bereichen zwischen ihnen besitzt, die keinen Kleber aufweisen.

5. Regenerator-Zugangskabel nach Anspruch 4, dadurch gekennzeichnet, daß der erste Endbereich (4) der Verankerung (2) ein Loch (21) aufweist, das nach innen mündet und den leitenden Lack zur Ausbildung der leitenden Zwischenschicht (20) eindringen läßt.

6. Regenerator-Zugangskabel nach einem der Ansprüche 1 bis 5, mit metallischem Schutzrohr, bei dem die inneren Übertragungselemente aus Lichtleitfasern bestehen, dadurch gekennzeichnet, daß das freie Ende außerdem ein steifes Kapillarrohr (25) aufweist, das die Fasern (10) umgibt und innerhalb des Schutzrohrs (11) angeordnet ist, wo es sich über den zweiten Endbereich (5) der auf dem Schutzrohr befestigten Verankerung (2) hinaus erstreckt.

7. Regenerator-Zugangskabel nach Anspruch 6, dadurch gekennzeichnet, daß das Kapillarrohr (25) im Schutzrohr auf dem freien Ende vom Schutzrohr selbst und dem zweiten aufgepreßten Endbereich (5) der Verankerung (2) gehalten wird.

## Claims

1. An under-sea repeater access cable (1), coming from a repeater and providing connection thereof to an under-sea line cable inside a splice box (7), said access cable containing transmission members enclosed in a protective tube (11) which is in turn covered by a sheath, with that end of said access cable which is opposite from the repeater being a free end equipped with an end coupling (2) fitted over and fixed onto said protective tube (11) which is free of said sheath at this end, with said coupling (2) having a central fixing portion (3) for fixing into an entrance (6) of the splice box (7) and, at respective ends, a first end portion (4) received in said splice box and an opposite second end portion (5) which remains outside the splice box (7), said access cable being characterized in that said central portion (3) of the coupling (2) has direct anchoring means (3A) for anchoring it directly in the entrance (6) of the splice box (7), and in that said second end portion (5) of the coupling is crimped (17-19) and has an inner glue joint (15) between said second end portion and the protective tube (11), with said joint being made of high mechanical strength glue, so that the fixings of the coupling (2) onto said protective tube and into said splice box are given mechanical properties comparable to the mechanical properties of the sheathed protective tube.

2. A repeater access cable according to claim 1, characterized in that said second end portion (5) of the coupling (2) has at least three crimped regions (17-19) on the protective tube (11) along said second end portion, with each crimped region being angularly offset relative to its adjacent region, preferably substantially by 90°.

3. A repeater access cable according to claim 1 or 2, characterized in that the inner glue joint (15) is made of a glue filled with Carborundum powder.

4. A repeater access cable according to any one of claims 1 to 3, having a metal protective tube and a metal end coupling, and characterized in that it further includes an interposed film of conductive varnish (20), interposed between said coupling (2) and said protective tube, in those portions of them which have no glue between them.

5. A repeater access cable according to claim 4, characterized in that said first end portion (4) of said coupling (2) has a hole (21) opening out inwards and receiving said conductive varnish to form the interposed conductive film (20).

6. A repeater access cable according to any one of claims 1 to 5, having a metal protective tube in which the inner transmission members are constituted by optical fibers, said access cable being characterized in that said free end further includes a rigid capillary tube (25) surrounding said fibers (10) and inside said protective tube (11), with said capillary tube extending through said protective tube (11) and beyond the second end portion (5) of said coupling (2) fixed on said protective tube.

7. A repeater access cable according to claim 6, characterized in that said capillary tube (25) is held in place in said protective tube, on said free end, by the protective tube itself and by the crimped second end portion (5) of said coupling (2).
